# Europäisches Patentamt
# European Patent Office
# Office européen des brevets

(19)

(11) Numéro de publication: **0 091 339**
**B1**

(12) ## FASCICULE DE BREVET EUROPEEN

(45) Date de publication du fascicule du brevet:
**14.05.86**

(21) Numéro de dépôt: **83400594.4**

(22) Date de dépôt: **22.03.83**

(51) Int. Cl.⁴: **H 04 N 5/18**

(54) Circuit numérique d'alignement de niveau d'un signal analogique.

(30) Priorité: **02.04.82 FR 8205783**

(43) Date de publication de la demande:
**12.10.83 Bulletin 83/41**

(45) Mention de la délivrance du brevet:
**14.05.86 Bulletin 86/20**

(84) Etats contractants désignés:
**BE CH DE GB IT LI LU NL**

(56) Documents cités:
**EP - A - 0 074 683**

**SMPTE JOURNAL, vol. 87, no. 1, janvier 1978, pages 15-19, New York, USA, Y. ETO et al.: "Digital processing amplifier and color encoder"**

(73) Titulaire: **THOMSON-CSF, 173, Boulevard Haussmann, F-75379 Paris Cedex 08 (FR)**

(72) Inventeur: **Eouzan, Jean-Yves, Thomson-CSF SCPI 173, bld. Haussmann, F-75379 Paris Cedex 08 (FR)**
Inventeur: **Boyer, Robert, Thomson-CSF SCPI 173, bld. Haussmann, F-75379 Paris Cedex 08 (FR)**

(74) Mandataire: **Turlèque, Clotilde et al, THOMSON-CSF SCPI 19, avenue de Messine, F-75008 Paris (FR)**

ACTORUM AG

## Description

L'invention se rapporte aux circuits de traitement numérique de signaux, notamment de télévision, et plus particulièrement à un circuit numérique d'alignement de la composante continue utile d'un signal analogique dans de tels circuits de traitement.

Dans un système de traitement de signal, il arrive que la composante continue utile du signal traité soit perdue. Il est indispensable de la restituer, avant utilisation du signal, afin de restituer l'information contenue dans ce signal de manière convenable.

Classiquement dans les circuits de traitement numérique de signaux initialement analogiques, la restauration de la composante continue du signal, ou l'alignement d'un niveau de ce signal (par exemple le niveau de noir pour un signal de télévision) sur un niveau de référence, est effectuée par traitement du signal analogique, avant conversion numérique, par un circuit analogique. Ce circuit comporte une porte de commutation, déterminant les intervalles pendant lesquels est fixé le niveau de référence, et une capacité jouant le rôle de mémoire qui a également un effet de filtrage pour le bruit qui peut être présent sur le niveau pris comme base pour l'alignement.

Lorsque cet alignement de niveau est ainsi réalisé sur le signal analogique, il est nécessaire que le convertisseur analogique-numérique qui traite ensuite le signal pour le convertir en un signal numérique soit très stable. Sinon les dérives introduites ne peuvent être corrigées et même si la stabilisation a été faite sur le signal analogique, il subsiste des dérives dans le signal de sortie.

De plus, un tel circuit d'alignement analogique nécessite un compromis entre la rapidité d'établissement et la stabilité. En effet une durée d'établissement courte exige une capacité de valeur faible alors qu'une bonne stabilité exige une capacité de valeur assez forte. De plus, compte tenu du courant de fuite du circuit, la correction doit être faite à une fréquence suffisante.

Une solution hybride à ce problème qui associe à une fonction d'alignement analogique une boucle de contre réaction numérique est décrit dans la demande de brevet européen N° 74683 déposée sous priorité britannique du 11.09.81, mais le dispositif décrit dans cette demande associe encore à la boucle de contre réaction numérique un intégrateur analogique formé par un amplificateur et une capacité, de sorte qu'il reste toujours sujet à des dérives dues principalement au courant de fuite de la capacité.

L'invention a pour objet un circuit numérique d'alignement de niveau, circuit de «clamp» numérique suivant la terminologie anglosaxonne, qui évite les inconvénients sus-mentionnés du circuit analogique précédant le convertisseur. En particulier ce circuit englobe, dans la correction qu'il réalise, la compensation des éventuelles dérives du convertisseur analogique-numérique du circuit de traitement numérique, a une durée d'établissement courte et une durée de maintien aussi longue que souhaitée, et ne nécessite pas de compromis entre la rapidité et la stabilité.

Suivant l'invention, un circuit numérique d'alignement de niveau d'un signal analogique ayant des paliers à aligner sur un niveau de référence $(V_R)$, comportant une entrée $(E_{vidéo})$, couplée à l'entrée d'un convertisseur analogique-numérique et une sortie numérique $(S_N)$, un circuit numérique de détection d'erreur et de calcul de correction ayant une entrée de signal reliée à la sortie numérique $(S_N)$, un circuit séquenceur recevant des impulsions d'alignement pendant les paliers du signal d'entrée et commandant le circuit numérique de détection, un convertisseur numérique-analogique couplé à la sortie du circuit de détection pour délivrer un signal analogique de correction maintenue entre deux impulsions d'alignement successives, ce signal étant combiné au signal d'entrée pour ramener, à la sortie du circuit $(S_N)$, les valeurs numériques associées aux paliers du signal d'entrée à la valeur associée au niveau de référence, est caractérisé en ce que le circuit de détection et de calcul comporte un circuit à mémoire, pour la mise en mémoire des valeurs numériques de correction calculées, ayant une sortie formant la sortie d'un circuit numérique de détection, et des moyens de comparaison de la valeur numérique $(R_N)$ associée au niveau de référence $(V_R)$ avec des valeurs numériques associées aux paliers du signal d'entrée, la sortie de ces moyens de comparaison étant reliée à la première entrée d'un additionneur dont la seconde entrée est reliée à la sortie du circuit à mémoire.

L'invention sera mieux comprise et d'autres caractéristiques apparaîtront à l'aide de la description qui suit en référence aux figures annexées.

Fig. 1 est un schéma synoptique du circuit numérique d'alignement de niveau suivant l'invention;

Fig. 2 est un diagramme de signal traité par ce dispositif;

Fig. 3 est un schéma du circuit de détection d'erreur et de calcul de la correction pour un circuit comportant un convertisseur analogique-numérique «bipolaire»;

Fig. 4 est un schéma synoptique détaillé d'un second mode de réalisation de ce circuit, avec un convertisseur analogique-numérique «unipolaire»;

Fig. 5 est un diagramme de signaux.

Comme indiqué ci-dessus, la restitution de la composante continue d'un signal d'image est indispensable pour une restitution convenable des images. Classiquement en télévision, cette restitution est effectuée en maintenant le niveau de suppression à une valeur de référence $V_R$, ce niveau de suppression étant le zéro des luminances, soit le niveau de noir. Cet alignement est réalisé en calant le signal d'image sur sa valeur de référence à un instant donné, compris dans la durée du signal de suppression de ligne et déterminé par des impulsions à la fréquence ligne, dites impulsions d'alignement.

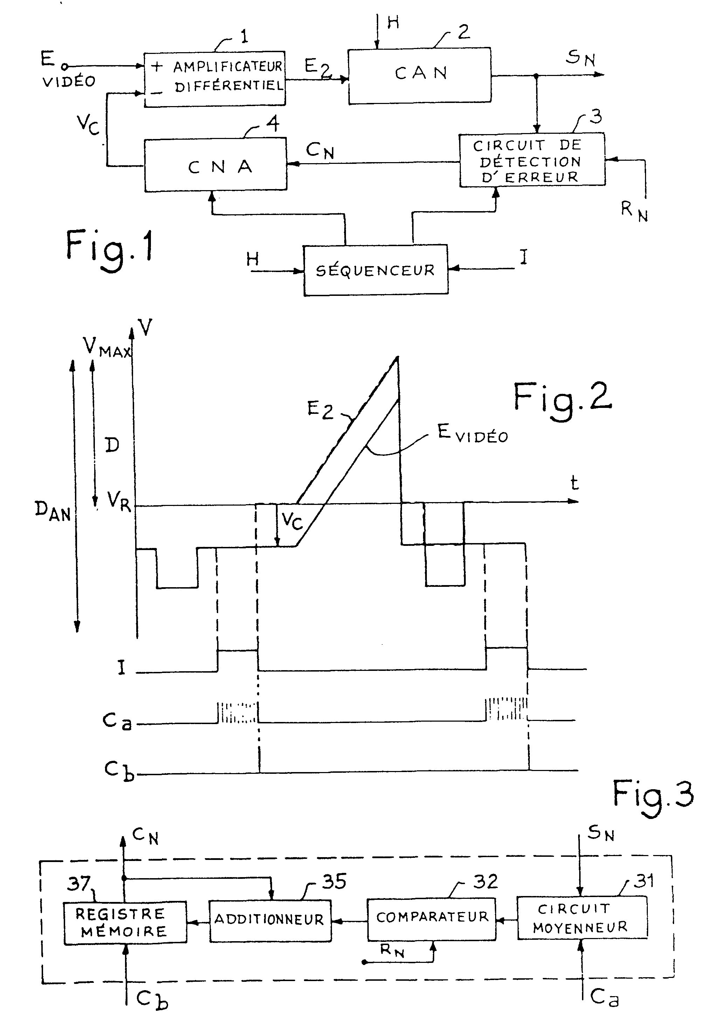

Le circuit d'alignement de niveau suivant l'invention inclut le convertisseur analogique-numérique dans la boucle afin d'en compenser les dérives éventuelles. La fig. 1 représente un schéma synoptique de ce circuit. Il comporte une entrée de signal analogique vidéo $E_{vidéo}$ reliée à une première entrée (+) d'un amplificateur différentiel 1. La sortie de cet amplificateur est reliée à l'entrée de signal $E_2$ du convertisseur analogique-numérique, CAN, 2 qui a une entrée d'horloge un signal H à la fréquence d'échantillonnage et dont la sortie $S_N$ fournit le signal numérique. Pour l'alignement du niveau du signal, la sortie $S_N$ est reliée à l'entrée d'un circuit 3 de détection d'erreur et de calcul de la valeur de correction correspondante dont la sortie délivre, à partir de l'erreur détectée entre la valeur numérique de l'amplitude à des instants de référence et la valeur numérisée que cette amplitude devrait avoir à ces mêmes instants, une valeur numérique de correction tenant compte de la correction précédente. La sortie de ce circuit d'erreur 3, est reliée à l'entrée d'un convertisseur numérique-analogique, CNA, 4 dont la sortie est reliée à la deuxième entrée (−) de l'amplificateur différentiel. Le circuit de détection d'erreur 3 et le convertisseur numérique-analogique 4 ont des entrées de commande reliées à des sorties d'un séquenceur 5 recevant un signal de commande, I, constitué des impulsions d'alignement à la fréquence du signal analogique (fréquence ligne du signal vidéo par exemple), ces impulsions coïncidant avec des paliers du signal analogique qui doivent être fixés au niveau de référence (noir par exemple dans un signal vidéo). Le séquenceur reçoit également un signal d'horloge H à la fréquence d'échantillonnage du convertisseur analogique-numérique.

Dans ce mode de réalisation, la dynamique et la résolution du CNA doivent être comparables à celles du CAN.

Les détails du fonctionnement de ce circuit seront donnés ci-après en liaison avec la description de deux modes de réalisation.

Lorsque la dynamique $D_{AN}$ du convertisseur analogique-numérique est double de celle D du signal, le convertisseur dit «bipolaire» délivre toujours à sa sortie des échantillons caractéristiques de la valeur analogique du signal d'entrée; en particulier, pendant le palier de suppression ligne les échantillons peuvent être utilisés directement pour calculer l'erreur entre les amplitudes de ces échantillons et l'amplitude qui devrait être la leur si le niveau de noir était bien fixé.

Dans ce cas, le circuit 3 de détection d'erreur et de calcul de la correction comporte, comme représenté sur la fig. 3, un circuit moyenneur 31 commandé par un signal de commande $C_a$ constitué d'impulsions à la fréquence d'échantillonnage F pendant l'impulsion d'alignement. Ce moyenneur permet de filtrer le bruit présent sur le palier, pris comme référence, du signal d'entrée. La sortie du moyenneur est reliée à la première entrée d'un comparateur 32 recevant sur son autre entrée la valeur numérique $R_N$ correspondant au niveau de référence $V_R$. Sa sortie est reliée à la première entrée d'un additionneur 35 dont la sortie est reliée à l'entrée d'un registre mémoire 37 qui délivre la valeur numérique de correction $C_N$ appliquée à la seconde entrée de l'additionneur 35 d'une part et à l'entrée du convertisseur numérique-analogique 4. Ce dernier fournit un signal de correction analogique $V_C$ superposé au signal d'entrée pendant la ligne pour ramener le niveau du palier au niveau de référence et décaler convenablement le reste de la ligne. Le registre mémoire et l'additionneur sont commandés par un signal de commande $C_b$ déclenché à la fin des impulsions d'alignement.

La fig. 2 représente le diagramme d'un signal vidéo de télévision. Pour une ligne complète, le signal est constitué d'une impulsion de synchronisation ligne d'amplitude et de durée prédéterminées, d'un palier dē suppression correspondant au noir absolu et, pour une ligne variant de façon continue du noir au blanc, d'une rampe de luminance. Sur cette même figure ont été représentés les impulsions d'alignement I et les signaux de commande $C_a$ et $C_b$ respectivement appliqués au circuit moyenneur et au CNA.

Ce type de circuit d'alignement est très intéressant dans le cas de traitement numérique de signal vidéo infrarouge et plus généralement pour un traitement de signal très basse fréquence.

Lorsque la dynamique $D_{AN}$ du CAN est à peu près égale à celle D du signal, le convertisseur est dit «unipolaire» et le circuit est un peu différent car il n'est pas possible de déterminer un signal d'erreur directement à partir des échantillons considérés pendant l'impulsion d'alignement. En effet, lorsque la dynamique du CAN est par exemple 0V à $V_{MAX}$ et que le signal vidéo à l'entrée est tel que le palier de suppression ligne a un niveau $V_N$ négativ, le CAN délivre à sa sortie la même valeur numérique, soit 0 (sur huit bits si le convertisseur délivre les valeurs sur huit bits) pour tout signal d'entrée inférieur à la limite basse de la dynamique (0V); de même lorsque le signal est décalé vers les valeurs positives, le convertisseur délivre la même valeur numérique, soit 1 (sur huit bits) pour tout signal d'entrée supérieur à la limite haute.

Dans ce cas l'alignement sera mis en œuvre en deux phases.

Dans une première phase, durant les premières périodes d'échantillonnage des impulsions d'aglignement, le circuit réalise un préalignement grossier du signal vidéo afin de ramener le niveau du palier pris comme base à l'intérieur de la dynamique d'entrée du CAN.

Dans une seconde phase, à partir des échantillons prélevés après l'alignement grossier, un signal d'erreur fin est déterminé par moyennage des différences entre les valeurs de ces échantillons et la référence numérique $R_N$ correspondant au niveau de référence $V_R$ du palier. Pour que cet alignement fin soit réalisé convenablement il est indispensable de fixer le niveau de référence $V_R$ du palier à une valeur différente de celle associée à la limite inférieure de la dynamique du CAN, de façon à distinguer un signal inférieur à ce niveau de référence d'un signal ayant ce niveau.

Pendant cette seconde phase la valeur numérique de correction $C_N$ appliquée à l'entrée du convertisseur numérique-analogique est celle déterminée lors de l'alignement grossier, et à la fin de cette phase l'alignement fin du signal est réalisé en modifiant la valeur numérique de correction appliquée à l'entrée du CNA.

Enfin dans une troisième phase éventuelle, par un moyennage des échantillons et une comparaison de la moyenne avec la référence numérique, il est possible de confirmer, via le convertisseur numérique-analogique, le signal de correction à appliquer pendant le reste de la ligne.

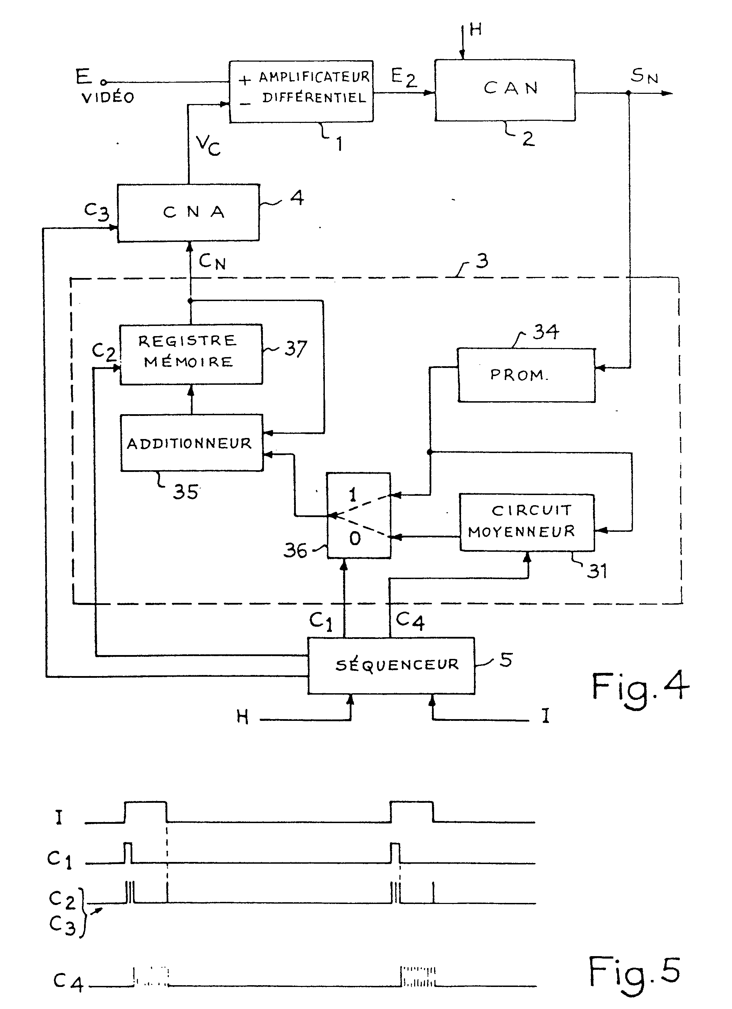

La fig. 4 représente un exemple de schéma synoptique plus détaillé du circuit de la fig. 1 pour ce mode de réalisation.

Le circuit 3 de détection d'erreur et de calcul de la correction comporte, dans ce mode de réalisation, une mémoire programmée 34 dont l'entrée est reliée à la sortie numérique $S_N$ du CAN 2. La sortie de cette mémoire est reliée à la première entrée d'un additionneur 35 via un multiplexeur 36 à deux entrées et une sortie. La sortie de cet additionneur est reliée à l'entrée d'un registre mémoire 37 dont la sortie est reliée à l'entrée du CNA, 4. Cette sortie est également reliée à la seconde entrée de l'additionneur 35. Le circuit de détection d'erreur comporte en outre, pour la seconde phase, un circuit moyenneur 31 dont l'entrée est reliée à la sortie de la mémoire programmée 34, et dont la sortie est reliée à la seconde entrée du multiplexeur 36.

Le séquenceur 5 divise les impulsions d'alignement I appliquées sur son entrée de commande en deux zones, correspondant aux deux phases de traitement et génère les signaux de commande $C_1$, $C_2$, $C_3$, $C_4$ représentés sur la fig. 5 et décrits ci-dessous. Le multiplexeur 36 a son entrée de commande reliée à une première sortie du circuit séquenceur 5, qui délivre le signal $C_1$ à l'état 1 pendant la première phase de l'impulsion d'alignement. Le signal transmis à la sortie du multiplexeur 36 est respectivement le signal présent sur sa première ou sur sa seconde entrée suivant que le signal de commande $C_1$ est à l'état 1 ou 0.

Durant la première phase (signal $C_1$ à l'état 1) le préalignement grossier est réalisé à un rhythme qui doit tenir compte du temps de propagation dans le convertisseur. Par exemple, si la conversion est effectuée à une fréquence d'échantillonnage F, le temps de propagation équivaut à n périodes d'échantillonnage. En appliquant une valeur numérique de correction donnée, l'effet correspondant sur l'asservissement n'est réalisé qu'après n impulsions d'horloge. En conséquence lors de cette première phase, le séquenceur 5 fournit au registre mémoire 36 et au CNA 4, des signaux de commande $C_2$ et $C_3$ à la fréquence $\frac{F}{n}$, légèrement décalés.

La mémoire morte 34, à partir des échantillons délivrés par le CAN pendant l'état haut du signal de commande $C_1$, définit la valeur numérique d'erreur à superposer à la valeur numérique de correction précédente dans l'additionneur 35 pour définir la nouvelle valeur de correction à appliquer au CNA. Le signal analogique de correction généré ramène le palier considéré à un niveau compris dans la dynamique du CAN. Les valeurs numériques $V_N$ de ces échantillons sont considérées par rapport à trois valeurs particulières: les limites supérieure et inférieure de la dynamique du convertisseur, et la valeur numérique $R_N$ du niveau de référence associé au palier de référence, choisie comme indiqué ci-dessus à une valeur différente de la limite inférieure de la dynamique.

La mémoire morte 34 délivre des valeurs numériques d'erreur suivantes:

Si $V_N = 1111...$ c'est-à-dire la limite supérieure de la dynamique du CAN, la mémoire 34 délivre une valeur numérique d'erreur maximum, égale par exemple à la moitié de la dynamique du CAN, et la valeur numérique de correction $C_N$ appliquée au CNA est la valeur précédente diminuée de cette valeur d'erreur;

Si $R_N < V_N < 1111...$, alors la valeur numérique d'erreur est $V_N–R_N$ et la valeur numérique de correction grossière appliquée au CNA est la valeur précédente diminuée de cette valeur d'erreur;

Si $V_N = R_N$ (ou très voisine), la valeur numérique de correction de la ligne précédente n'est pas modifiée;

Si $0000... < V_N < R_N$, alors la valeur numérique d'erreur est $R_N–V_N$ et la valeur numérique de correction grossière appliquée au CNA est la valeur précédente augmentée de cette erreur;

Si $V_N = 0000...$, c'est-à-dire la limite inférieure de la dynamique du CAN, la mémoire délivre une valeur numérique d'erreur maximum, égale par exemple à la moitié de la dynamique du CAN et la valeur numérique de correction est la valeur précédente augmentée de cette valeur d'erreur.

En résumé, durant la phase de correction grossière, la mémoire programmée 34 délivre la valeur d'erreur $R_N–V_N$, avec son signe, qui est ajouté algébriquement à la valeur numérique de correction précédente par l'additionneur 35 lorsque le niveau de suppression se trouve dans la dynamique du CAN, et une valeur maximale $V_{MAX}$ avec le signe déterminant le sens du décalage lorsque le niveau de suppression est en dehors de la dynamique du CAN.

Durant la seconde phase, la mémoire programmée 34 délivre toujours l'erreur $R_N–V_N$, avec son signe et cette erreur est transmise au circuit moyenneur 31 qui permet, en prenant en compte tous les échantillons de cette seconde phase, de filtrer le bruit. Pour cela le circuit moyenneur 31 est commandé par un signal $C_4$ constitué d'impulsions à la fréquence d'échantillonnage F pendant la deuxième phase de l'impulsion d'alignement.

A la fin de cette seconde phase, l'additionneur 35 prend en compte la sortie du moyenneur et calcule à partir de la valeur précédente de la correction la nouvelle valeur de correction enregistrée dans le registre mémoire 37 et transmise au convertisseur numérique-analogique pour verrouiller le niveau de suppression pendant le reste de la ligne. Pour cela les signaux de commande $C_2$ et $C_3$ comportent à la fin de la seconde phase une impulsion d'horloge.

Il est possible de prévoir une troisième phase pendant la fin de l'impulsion d'alignement, le circuit séquenceur délivrant des signaux de commande $C_2$, $C_3$, $C_4$ correspondants pour effectuer une détection semblable à celle effectuée pendant la seconde phase afin de confirmer l'exactitude de la valeur mise en mémoire à la fin de cette seconde phase.

L'invention n'est pas limitée aux modes de réalisation décrits et représentés.

En particulier, dans les modes de réalisation décrits, le circuit moyenneur traite les valeurs numériques des échantillons à la sortie du CAN; mais il est possible d'effectuer un moyennage analogique en plaçant un intégrateur entre l'amplificateur différentiel et le CAN; cet intégrateur n'étant actif que pendant la phase utile de l'impulsion d'alignement.

Par ailleurs, au lieu d'utiliser un amplificateur différentiel pour réaliser l'alignement à partir de la valeur numérique de correction convertie en un signal analogique, il est possible de supprimer cet amplificateur et de faire varier directement les tensions de référence du CAN.

## Revendications

1. Circuit numérique d'alignement de niveau d'un signal analogique ayant des paliers à aligner sur un niveau de référence ($V_R$), comportant une entrée ($E_{vidéo}$), couplée à l'entrée d'un convertisseur analogique-numérique (2) et une sortie numérique ($S_N$), un circuit numérique (3) de détection d'erreur et de calcul de correction ayant une entrée de signal reliée à la sortie numérique ($S_N$), un circuit séquenceur (5) recevant des impulsions d'alignement pendant les paliers du signal d'entrée et commandant le circuit numérique de détection (3), un convertisseur numérique-analogique couplé à la sortie du circuit de détection (3) pour délivrer un signal analogique de correction maintenu entre deux impulsions d'alignement successives, ce signal étant combiné au signal d'entrée pour ramener, à la sortie du circuit ($S_N$), les valeurs numériques associées aux paliers du signal d'entrée à la valeur associée au niveau de référence, caractérisé en ce que le circuit de détection et de calcul (3) comporte un circuit à mémoire (37), pour la mise en mémoire des valeurs numériques de correction calculées, ayant une sortie formant la sortie d'un circuit numérique de détection (3), et des moyens de comparaison (32, 34) de la valeur numérique ($R_N$) associée au niveau de référence ($V_R$) avec des valeurs numériques associées aux paliers du signal d'entrée, la sortie de ces moyens de comparaison étant reliée à la première entrée d'un additionneur (35) dont la seconde entrée est reliée à la sortie du circuit à mémoire (3).

2. Circuit selon la revendication 1, caractérisé en ce que les valeurs numériques associées aux paliers du signal d'entrée sont des valeurs numériques moyennes, le circuit numérique d'alignement comportant à cet effet un moyenneur (31) commandé par le séquenceur (5).

3. Circuit selon la revendication 2, caractérisé en ce que, le convertisseur analogique-numérique étant un convertisseur bipolaire, le circuit numérique (3) de détection d'erreur et de calcul de correction détermine un signal de correction à la fin des impulsions d'alignement à partir d'une valeur numérique moyenne mesurée sur la durée de l'impulsion d'alignement.

4. Circuit selon la revendication 2, caractérisé en ce que, le convertisseur analogique-numérique étant un convertisseur unipolaire, le niveau de référence est associé à une valeur numérique différente des valeurs limites du convertisseur et en ce que le circuit numérique (3) de détection d'erreur et de calcul de correction détermine un ou plusieurs signaux de correction grossière pendant une première phase des impulsions d'alignement pour ramener les valeurs numériques associées aux paliers du signal d'entrée dans la dynamique du convertisseur analogique-numérique, puis détermine un signal de correction fine à la fin des impulsions d'alignement à partir d'une valeur numérique moyenne mesurée pendant une seconde phase de l'impulsion d'alignement.

## Patentansprüche

1. Digitaler Schaltkreis zur Pegeleinstellung eines Analogsignals, in dem Spannungsstufen auf einen Bezugspegel ($V_R$) eingestellt werden sollen, mit einem Eingang ($E_{video}$), der an den Eingang eines Analog-Digitalwandlers (2) angeschlossen ist, und mit einem digitalen Ausgang ($S_N$), einem digitalen Fehlererkennungs- und Korrekturberechnungsschaltkreis (3), dessen Signaleingang an den digitalen Ausgang ($S_N$) angeschlossen ist, einem Folgesteuerungsschaltkreis (5), der Einstellimpulse während der Spannungsstufen des Eingangssignals zugeführt erhält und den digitalen Erkennungsschaltkreis (3) steuert, einem Digital-Analogwandler, der an den Ausgang des Erkennungsschaltkreises (3) angeschlossen ist, um ein analoges Korrektursignal zu liefern, das zwischen zwei aufeinanderfolgenden Einstellimpulsen aufrechterhalten wird und mit dem Eingangssignal kombiniert wird, um die digitalen, den Spannungsstufen des Eingangssignals zugeordneten Werte am Ausgang des Schaltkreises ($S_N$) auf die Werte zu bringen, die dem Bezugspegel zugeordnet sind, dadurch gekennzeichnet, dass der Schaltkreis zur Erkennung und zur Berechnung (3) einen Speicherschaltkreis (37) zur Einspeicherung der berechneten digitalen Korrekturwerte mit einem Ausgang, der den Ausgang eines digitalen Erkennungsschaltkreises (3) bildet, und Vergleichsmittel (32, 34) aufweist, mit denen der digitale Wert ($R_N$), der dem Bezugspegel ($V_R$) zugeordnet ist, mit digitalen Werten verglichen wird, die den Spannungsstufen des Eingangssignals zugeordnet sind, wobei der Ausgang dieser Vergleichsmittel mit dem ersten Eingang eines Addierers (35) verbunden ist, dessen zweiter Eingang an den Ausgang des Speicherschaltkreises (37) angeschlossen ist.

2. Schaltkreis nach Anspruch 1, dadurch gekennzeichnet, dass die den Spannungsstufen des Eingangssignals zugeordneten digitalen Werte digitale Mittelwerte sind, wobei der digitale Einstellungsschaltkreis hierzu einen Schaltkreis zur Mittelwertbildung (31) aufweist, der vom Folgesteuerungsschaltkreis (5) gesteuert wird.

3. Schaltkreis nach Anspruch 2, dadurch gekennzeichnet, dass bei Verwendung eines bipolaren Wandlers als Analog-Digitalwandler der digitale Fehlererkennungs- und Korrekturberechnungsschaltkreis (3) ein Korrektursignal am Ende der Einstellimpulse ausgehend von einem digitalen Mittelwert bestimmt, der über die Dauer des Einstellimpulses gemessen wurde.

4. Schaltkreis nach Anspruch 2, dadurch gekennzeichnet, dass bei Verwendung eines unipolaren Wandlers als Analog-Digitalwandler der Bezugspegel einem digitalen Wert zugeordnet ist, der von den Grenzwerten des Wandlers verschieden ist, und dass der digitale Fehlererkennungs- und Korrekturberechnungsschaltkreis mindestens ein Grobkorrektursignal während einer ersten Phase der Einstellimpulse bestimmt, um die den Spannungsstufen des Eingangssignals entsprechenden digitalen Werte in den Dynamikbereich des Analog-Digitalwandlers zu bringen, und dass dann ein Feinkorrektursignal am Ende der Einstellimpulse ausgehend von einem digitalen Mittelwert bestimmt wird, der während einer zweiten Phase der Einstellimpulse gemessen wird.

**Claims**

1. A digital clamping circuit for clamping levels of an analog signal to a reference level ($V_R$), comprising an input ($E_{video}$) coupled to the input of an analog-digital converter (2), and a digital output ($S_N$), a digital circuit (3) for detecting errors and for calculating the correction, this circuit having a signal input which is connected to the digital output ($S_N$), a sequence control circuit (5) receiving clamp pulses during the presence of the input signals levels and controlling the digital detection circuit (3), a digital-analog converter coupled to the output of the detection circuit (3) for supplying an analog correction signal which is maintained between two successive clamp pulses, this signal being combined with the input signal for bringing the digital values associated to the input signal levels at the circuit output ($S_N$) to the value associated to the reference level, characterized in that the detection and calculation circuit (3) comprises a memory circuit (37) for storing the calculated digital correction values, the memory output constituting the output of a digital detection circuit (3), and comparison means (32, 34) for comparing the digital value ($R_N$) associated to the reference level ($V_R$) with digital values associated to the input signal levels, the output of these comparison means being connected to the first input of an adder (35), the second input of which is connected to the output of the memory circuit (37).

2. A circuit according to claim 1, characterized in that the digital values associated to the input signal levels are mean digital values, the digital clamp circuit comprising to this end an averaging circuit (31) which is controlled by the sequence control circuit (5).

3. A circuit according to claim 2, characterized in that, the analog-digital converter being a bipolar converter, the digital circuit (3) for detecting errors and for calculating the correction determines a correction signal at the end of the clamp pulses on the basis of a digital mean value measured over the duration of the clamp pulse.

4. A circuit according to claim 2, characterized in that, the analog-digital converter being a unipolar converter, the reference level is associated to a digital value which is different from the extreme values of the converter, and that the digital circuit (3) for detecting errors and for calculating the correction determines one or more coarse correction signals during a first phase of the clamp pulses for bringing the digital values associated to the input signal levels into the dynamic range of the analog-digital converter, and that then a fine correction signal is determined at the end of the clamp pulses on the basis of a digital mean value measured during a second phase of the clamp pulses.

Fig.1

Fig.2

Fig.3

Fig.4

Fig.5